# EUROPEAN PATENT APPLICATION

(11) **EP 2 141 924 A1**
(43) Date of publication of application: **06.01.2010**
(21) Application number: 08305374.4
(22) Date of filing: 03.07.2008
(51) Int. Cl.: H04N 7/167

(54) **Process to ensure massive data diffusion security, and devices associated**

(71) Applicant: GEMPLUS, 13420 Gémenos (FR)
(72) Inventor: Gregoire, Louis, 13260 Cassis (FR); Foesser, Christophe, 13600 La Ciotat (FR); Mallet, Lionel, 13007 Marseille (FR)

(57) **Abstract**

The present invention describes a method to ensure or enhance rights management security in a massive data diffusion, based on the combination of ciphered data and control words. The invention permits to adapt and synchronize dynamically the protection of the rights management, and restore data protection in the case of key theft.

The invention also describes inherent devices implementation, on the transmission side and on the reception side.

## Description

The present invention takes place in the protection of data distribution, and particularly massive data diffusion, where access on the reception side is controlled by the use of "control words". The invention describes a way to secure these control words exchange, and the devices needed for that purpose. In particular, the present invention is well suited for the pay TV domain. It can be used as an extra layer of protection on top of an existing one, as a repair solution is case the first one has been compromised.

Massive data diffusion services are more and more used to send every kind of data used to transmit data to several recipients.

Actually the increasing size of exchanged data, and the exponential evolution of connected people generate more and more information traffic jams. These new condition are less and less adapted to Point to point exchange scheme.

The point to point exchange scheme is based on the fact that, to exchange data, only two peoples are needed, the sender, and the receiver. Then this exchange protocol is based on the creation of a "private pipe" between only these two actors. This model limit appears when a same provider wants to send data to several receivers; an eloquent example is the live TV case. When a TV content provider wants to diffuse TV programs, he broadcasts these programs to everybody. The issue linked to the point to point scheme is avoided (one pipe for each costumer), but the new problem is that selective access control cannot be performed at the source. Everybody can then access the service, provided he/she can receive the said TV programs.

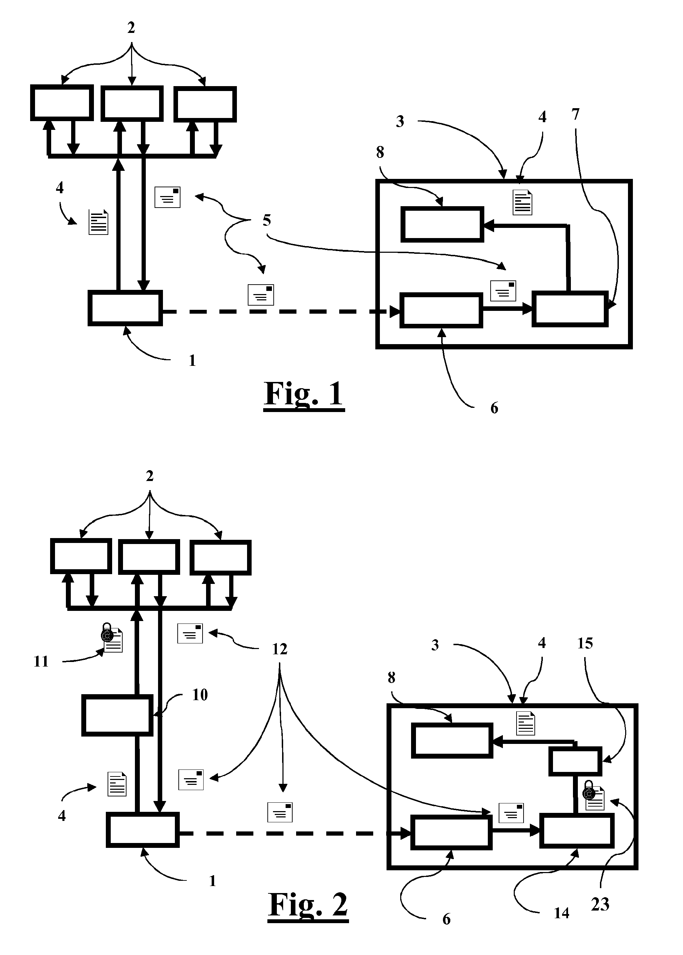

A solution consists in ciphering the program before sending it, and to provide the un-ciphering key only to allowed costumers. To implement this solution, a possible scheme is the one described in the figure 1

In this solution, a particular device, called "Transmitter" (1) contains means to cipher the streams of the program,(P) using keys called "control words". Control words change periodically and the series are transmitted in sync with the sequence of program streams that they protect. The control words are transmitted in encrypted form. For this purpose, one or more "message server" (2) encrypt the control word (4) with a service key (SK) and encapsulate the encrypted control word in a message called "control message" (5). The transmitter ciphers sequences of the TV programs streams with the said control words (4), and transmits both the ciphered program and the "control message". The TV programs and the messages may be transmitted via the same or different networks.

Both the programs and the messages can then be sent to everybody and over unsecured networks, as they are protected, and only the customers who hold the service key SK, and then can decrypt the series of control words, will be able to un-cipher the complete programs.

The control messages may contain information about the related TV program such as the program identifier, or condition to be met before being granted access.

In some cases, several control messages are transmitted at the same time, for the same service, with the same control word, so that the same program can be marketed by different operators, or accessed with different alternative protection technologies, depending on the user equipment. In this case, the transmitter makes message requests, using a same control word, to several different message servers connected via a common interface. The different control message then carry the same control word, but protected in different manners. The rest of the content of the control messages can also be different. This mode of operations is usually called simulcrypt.

"Simulcrypt": scheme where several message servers create control messages for the same piece of program and using the same control word.

On the customers' side, a terminal (3) used to receive the said program, contains a module (6) called "reception module" that receives the control messages and the ciphered programs ([P]), transmits the ciphered program to the descrambler (9) and the control messages to the "control message analyzer" (7). The "control message analyzer" is able to analyze control messages, and to extract the encrypted control words. It sends these control words to the control word decryptor, which is able to decrypt them with the service key SK. The control words are then used by the descrambler (8) to un-cipher the received TV program.

Figure 1 describes the above solution. For clarity, the solution described above and in figure 1 is called "service protection" hereafter.

It is common in pay TV systems to implement parts (7) and (8) of the above process in a separate, trusted device such as a smart card. This improves the protection of the service key.

In the service protection solution, all the security is based on the protection of control words, so if the Service key is disclosed, the control words are no more protected, and access becomes possible without authorization. There are several real-life cases of hackers managing to discover service keys and allowing many users to access pay TV freely, by distributing these keys and software to use them, so that users can bypass the protection system on the reception side. Different solutions exist to extract the value of secret keys from a tamper-resistant device. They take advantage of the specificities of the execution of cryptographic algorithms applied to specific keys that hackers want to discover.

When a non-legitimate user has access to the service key, the device that implements functions 7 and 8 of the initial solution (cf figure 1) is no longer necessary to him. The process can be replicated by any device or software. The non-legitimate viewers then use fake devices instead. Moreover, in this case, remote management of the legitimate devices is of no help for the TV provider to solve this problem.

An object of the invention is to solve the above mentioned technical problem.

In the present document, the following expressions will be used with the corresponding definition:
"control word (CW)" : the key needed to cipher and un-cipher the distributed data
"transmitter" : the entity that creates the control words, ciphers the programs, transmits the programs and the "control messages". It may be composed of several separate devices.
"control message" : message produced by the message server. It contains encrypted control words, and information about how and when the control words must be applied to the massively diffused data., it can contain also information about the conditions that the users needs to meet to get access to a particular program.
"message server" : Entity in charge of producing the control message, using the control word.
"terminal" : any kind of device able to receive distributed data and control messages, and able to exploit both to obtain un-ciphered data. In the mobile TV context, a terminal can be a mobile terminal equipments like telecom handsets or handheld TV receivers.
"changed control words" : according to the present invention, initial control words from the transmitter will be transformed according to specific rules. The obtained control words are called "changed control words"
"CW transformation": CW transformation, according to the present invention is the process applied to the initial control word in order to convert it into the "changed control word". "Un-transformation" is the reverse process.
"transformation parameters" : according to the present invention, all information used to tune control words are called transformation parameters. According to the use case, transformation parameters can contain cryptographic keys or parameters, transformation parameters can also contain one or more references to existing algorithm and/or keys, in specific use cases, the transformation parameters can contain all or part of an algorithm.

Like control words, control massages can be modified according to the invention. It will happen to transmit "transformation parameters" to the terminal device using the "control message" exchanges. Then, "changed control messages" will be produced. Every possible way to embed transformation parameters can be used according to the current invention. Some example of control message transformation will be described :
"Message transformation": transformation of an initial control message from the message server to a new one containing the Parameters.
"STKM": a particular kind of control message, according to a format defined by the OMA forum.
"capsule control message" is used to call a control message that includes a control message and transformation parameter. In this solution, the concatenation of the normal control message and the transformation parameters composes the data part of a new control message, called "capsule control message"
"enhanced control message", in this solution, the transformation parameters are inserted inside the data of the normal control message. For example transformation parameters can be inserted inside padding area.
"completed control message", there, some no used field of the control message are used to insert transformation parameters. These fields can exist and no used, or they can be added just for this. For example, a current norm of control messages describes some optional fields. If the normal control messages do not use this potentialities, it is possible to complete the control message adding the said optional fields to create the "completed control message"
"security overlay", this expression describes a set of functionalities that permits to implement the invention. In a logical point of view, this overlay can be inserted between the transmitter and the messages server, and is in charge on the modification of control words, and the creation, if needed, of modified control message. In a logical point of view, this overlay is transparent for transmitter and messages server, that means that, when the transmitter sends control words, the overlay receive control words, and when messages server waits control words, the overlay provides control words. Same thing for control messages. That permits to insert the
overlay in a normalized scheme without changing it.

This overlay can be an independent device or the functionalities can be embedded inside existing devices.

"crypto overlay", this is the corresponding overlay on the transmitter side. This overlay is in charge of detecting changed control messages, and extracting from transformation parameters and control massage.

"Service protection": existing service protection system using control words and control messages, before extension with the security overlay, object of the invention.

"restitution step": step of the service protection scheme consisting, on the receiver side, in the analysis of the control message content, then decryption and delivery of the control word. This part of the terminal function is usually implemented in a tamper-resistant device such as a smart card.

"Intermediate device": a device that can be inserted in the slot of the secure token of a terminal and holds a slot for secure token. An intermediate device in the case of this invention embodies the parameter extraction step and un-transformation step of the invention.

"proxy": a device C inserted between two devices A and B such that C replicates with regard to A the behavior of B, and replicates with regard to B the behavior of A.

"control message format": is the set of rules applicable for the creation of the content of a control message, such that the transmitter and the terminal are able to process it properly. As an example, a control message may be composed of a header, followed by payload, followed by a footer.

The object of the present invention is a process to secure the exchange of control words between at least a first electronic device, said "transmitter", at least one electronic device said "Message server", and at least a second electronic device called "terminal", the "control words" are produced by the "Transmitter" and send to the "Message server", then the "Message server" embeds "control word" into "control messages" and send them back to the "transmitter", the said "transmitter" send these control messages to the "terminal" that extract "control words" during a "restitution step", and uses them. This process contains at least the following additional steps:
- transformation of the "control words" into "changed control words" using at least one algorithm that keeps the format of the control words, before their reception by said "Message server",
- extraction of the "changed control words" from the "control messages", after reception by the "terminal",
- Un-transformation of "changed control words" to obtain the "control words".

The process can also contain the following steps:
- transmission of "transformation parameters" used in the transformation step, to the at least one said "terminal"
- reception, by at least one "terminal", of the "transformation parameters"
- use, of these "transformation parameters", during the un-transformation step.

In a first possible way, the "transmission of "transformation parameters"" step contains at least an encapsulation of control message and "transformation parameters" inside a changed control message called "capsule control message" that keeps the control message format. Then the "reception" consists into extracting, from "capsule control message", the "control message" that is transmitted to the "restitution step", and "transformation parameters" that will be used during the un-transformation step.

In a second possible way, the said "transmission of "transformation parameters"" step contains at least the insertion of "transformation parameters" inside all or part of at least one available field of the "control message" to obtain a changed control message called "enhanced control message" that keeps the control message format. Then the "reception" consists into extracting "transformation parameters" from "enhanced control message" to obtain "control message", transmitting said "control message" to the "restitution step", and "transformation parameters" to the un-transformation step.

In a third possible way, the "transmission of "transformation parameters"" step contains at least the insertion of "transformation parameters" inside at least one non used field of the control message to obtain a changed control message called "completed control message" that keeps the control message format. Then the "reception" consists into extracting "transformation parameters" from "completed control message" to obtain "control message", transmitting "control message" to the restitution step, and "transformation parameters" to the un-transformation step.

In all these cases, the "transformation" step can be done by the "transmitter" device, or inside a device called "security overlay".

The "transmission of "transformation parameters"" step can be done inside the "transmitter" device or inside a device called "security overlay".

The "un-transformation" step can be done inside the said "terminal" or inside a device called "crypto overlay".

The "reception" step can be done inside the said "terminal" or inside a device called "crypto overlay".

The object of the present invention is also a device able to receive control words from an electronic device called "transmitter", and to emit control words to at least one electronic device called "Message server", and to receive control message from the "Message server", and to emit control message to the "transmitter", the device object of the present invention contains also means to transform the "control words" into "changed control words" using at least one algorithm, keeping "control word" format.

It can also contain means to send "transformation parameters" used to transform "changed control words", to the "terminal".

In a first possible way, "transformation parameters" are encapsulated, with control message, into "changed control message" that keeps control message format.

In a second possible way, "transformation parameters" are inserted inside "control message", to obtain "enhanced control message" that keeps control message format.

In a third possible way, "transformation parameters" are embedded inside at least one data of said control message to obtain a new control message called "completed control message" that keeps control message format.

The object of the present invention is also a device able to receive control message from at least one electronic device said "transmitter", including a "control message receiver" able to extract "control words" from "control message", the device object of the present invention contains also means to restitute the "changed control words" from the said "control messages", and means to Un-transform said "changed control words" to obtain the said "control words".

The device object of the present invention can also contains means to analyze control message, and to distinguish "changed control message" or "control message". It can also contain means to extract, from "changed control message", "transformation parameters" and "control message". It can also contain means to transmit "transformation parameters" to the means able to Un-transform said "changed control words" to obtain the said "control words". It can also contain means to transmit "control messages" to the said "control message receiver".

The invention can also be understood as a process to secure the exchange of control words between at least a first electronic device, said "transmitter", at least one second electronic device said "Message server", and at least a third electronic device called "terminal", the "control words" are produced by the "Transmitter" and sent to the "Message server", then the "Message server" embeds said "control words" into "control message" and send it back to the "transmitter", the said "transmitter" sends this control message to the "terminal" that extracts said "control words" during a "restitution step", and uses them,
the said process contains at least the following additional steps:
- transformation of the said "control words" into "changed control words" using at least one algorithm that keeps the format of the control words, before their reception by said "Message server",
- extraction of the said "changed control words" from the said "control messages", after reception by the said "terminal",
- Un-transformation of said "changed control words" to obtain the said "control words".

This process can contain at least the following steps :
- transmission of "transformation parameters" used in the transformation step, to the at least one said "terminal"
- reception, by the said at least one "terminal", of the said "transformation parameters"
- use, of these said "transformation parameters", during the said un-transformation step.
   Then the said "transmission of "transformation parameters"" step contains at least a combination of said control message and said "transformation parameters" inside a "changed control message" that keeps the control message format.
   The said "reception" consists in extracting, from "changed control message", said "control message" that is transmitted to the "restitution step", and said "transformation parameters" that will be used during the "un-transformation step".
   The invention is also a device able to receive control words from an electronic device called "transmitter" and that contains
- means to transform the received control words into "changed control words" using at least one algorithm, keeping "control word" format
- means to send said "changed control words" to at least one electronic device called "Message server".

This device can contain means to send to the "terminal", the "transformation parameters" used to transform "changed control words".

Then the said "transformation parameters" are combined, with control message, into "changed control message" that keeps control message format.

The invention is also a device able to receive control message from at least one electronic device said "transmitter", including a "control message receiver" able to extract "control words" from "control message", and that contains means to Un-transform said "changed control words" to obtain the said "control words".

This device can also contain means to analyze control message, and to distinguish "changed control message" or "control message".

It can also contain means to extract, from "changed control message", "transformation parameters" and "control message".

It can also contain means to transmit "transformation parameters" to the said means able to Un-transform said "changed control words" to obtain the said "control words".

This device can also contain means to transmit "control messages" to the said "control message receiver".

Other characteristics and advantages of the present invention will emerge more clearly from a reading of the following description of a number of preferred embodiments of the invention with reference to the corresponding accompanying drawings in which:
- Figure 1 depicts an example of massive data diffusion without implementing the invention;
- Figure 2 depicts an example of massive data diffusion implementing a control words modifying step according to the invention;
- Figure 3 depicts an example of massive data diffusion implementing a control words modifying step, and the transformation parameters exchange scheme.

The invention is a dynamic, incremental and recursive key protection scheme. It is dynamic in the sense that the protection parameters may be modulated permanently, without impacting the flow of data distribution. It is incremental in the sense that it can be added as an overlay on top of an existing protection scheme without changing the initial one. It is recursive in the sense that an extra overlay can be added to the previous one without change to the previous one.

One particular application is the protection of the transport key stream of TV service protection systems. The invention allows implementations compliant with the time constraints and network efficiency requirements of these applications.

When used as an overlay to an existing protection scheme, it is a recovery solution for the case where the existing solution has been compromised.

The invention consists in a transformation process applied to the series of control words before transmission to the message server, and the reverse transformation applied, on the receiver side, to the control words delivered by the processing of the control message. In addition, the invention includes a transformation of existing synchronized control messages before transmission, in order to transmit the current applicable protection parameters, and extraction of these parameters before control message processing in the receiver.

The invention can be applied to all kind of massively diffused data. Of course, to audio and video data that compose TV stream, but also pure data streams, that could compose for example advertisements, or information streams, etc.

In the specific context of mobile TV, the transmitter 1 is in charge of sending the control words 4 to all the message servers 2 more usually called content vendors. These actors use the control words and other information like access conditions or rights to create control messages 5 called STKM (Short Term Key Message). These STKM are sent back to the transmitter that sends them together with scrambled TV content, to the terminals 3. These terminals can be for example mobile phone or mobile TV-set and have a module called "reception module" 6 that receives the control messages, and transmits them to the "control message receiver" 7. The "control message receiver" is able to analyze control messages, and to extract control words. These control words are sent to an other module 8 that is able to un-cipher the received mobile TV program.

A very important point in the mobile TV world is that each actor: Transmitter, Messages server and terminal can be provided by an independent company. This is why all exchanges must be very clearly normalized.

An additional advantage of the present invention is that it permits to add security blocks inside a normalized scheme staying compatible with the said standard.

This is possible because the invention is divided in two major blocks, one that cipher, the other one that un-cipher, and both can be slipped between two actors and stay invisible for them.

The additional functionality of the ciphering block is the transformation step 10. This step permits to modify the control words before their use by the content providers 2. These modifications are done without changing the control words format, in order to keep all the standard interfaces. These modifications can be realized by applying every kind of operation on all or part of the control words. These operations can be mathematical ones, adding a constant for example, logical ones. This step can be embedded inside the transmitter actor, for example when the transmitter is in charge of the security scheme. In this case, the transmitter applies the transformation step before sending control words, and the messages servers 2 receive directly changed control words 11. Because the transformation step keeps the control word format, it is not possible, for the messages servers to know that the received control words have been modified.

In the example of implementation described in the figure 2, we are in the case where the key SK, shared by transmitter and content vendors has been broken. That is why, to ensure security level, the decision is taken to activate the transformation step 10. The transformation step 10 can consist in doubling the control word data field value and adding a flag bit at the end of this said data field. This transformation step is done by an independent server, slipped between the transmitter and the message servers, inside a new device called security overlay. This new device is invisible for all other actors.

In this use case, the content vendors produce control message 12 using the modified control word 11, without remarking it.

In the terminal, the reception module 6 receives the STKM, and transmits it to the "control message receiver" 7 that extracts the control word 23, and transmits it to the "un-transformation" block 15 that recognizes the flag value, inserted at the end of the control word data field.

Then the "un-transformation" block cancels the modification dividing by two the control word data field value, and erasing the inserted flag to obtain the original control word 4.

This control word can now be used by the module 8 that is able to un-cipher the received mobile TV program.

The un-transformation block 15 can be hosted by an independent device, for example a smart card, that is invisibly slipped between the module able to use control word, and the one that extract control word from control message.

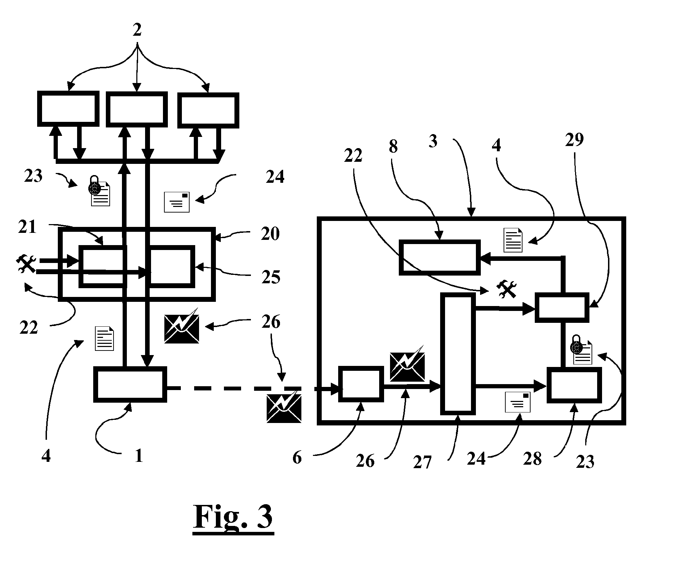

In this use case, the transformation step 10 and the un-transformation block 15 share the transformation nature. In a lot of situations it is not possible to share this critical kind of information. Then another part of the present invention must be implemented, and is described in the figure 3.

In this preferred use case, the transformation step nature can be very complex. For example it can be the application of a cryptographic algorithm like ALG with a key called KY. These data : "ALG" and "KY value" constitute the "transformation parameters" 22. Then, an other step called "transmission of transformation parameters" 25 must be inserted between content vendors and transmitter. This new, function will permit to receive the control message sent by the content vendors and to combine transformation parameters 22 with control message 24 to obtain a modified control message 26. It is very important to remark that this step happened does not change the control message format, the transmitter 1 was waiting for a control message, it receives effectively a control message. It is very important to remark that these modifications are done invisibly for transmitter and for content vendors.

In a preferred use case, the transformation step 10 and the transmission of transformation parameters are done inside the same server 20, also called security overlay, that is invisibly slipped between transmitter and content vendors.

Then the modified control message 26 is transmitted to the terminal.

In this use case, a new block 27 able to un-combine "transformation parameters" 22, and "control message" 24, from a "changed control message" 26, must be added between the reception module 6 and the "control message receiver" 28. This new block will be added without modifying the exchange format to be invisible for others actors.

The obtained transformation parameters 22 are sent to the un-transformation block 29. The control message 24 is sent to the control message receiver 28 that extracts control word 23. This is a modified control word, but it is invisible for the control message receiver. This control word is transmitted to the un-transformation block 29. The received transformation parameters 22 indicate that the control message has been modified using a ALG algorithm; and the KY key, so the un-transformation block is now able to revert the said modification and to obtain the original control word 4 that is transmitted to the block 8 that is able to use it to un-cipher the received mobile TV program.

In a preferred use case, the un-transformation block 29, and the block 27 able to un-combine "transformation parameters" 22, and "control message" 24, from a "changed control message" 26, are hosted by an independent device, also called crypto overlay, for example a smart card.

The invention is adapted to all kinds of massively diffused data, and all kinds of control words transformation. Some example of data: video, sound, data streams, files, software programs.

The "transmission of transformation parameters" can be done, accordingly with the invention, by all solutions that permit not to change the original transmission between others actors.

An interesting solution can be to use a new communication channel to transmit transformation parameters. For example, the security overlay can contain means to send an SMS (short message service) containing transformation parameters, to the crypto overlay that contains means to receive and analyze this message.

## Claims

1. Process to secure the exchange of control words (4) between at least a first electronic device (1), said "transmitter", at least one second electronic device (2) said "Message server", and at least a third electronic device (3) called "terminal", the "control words" (4) are produced by the "Transmitter" (1) and send to the "Message server" (2), then the "Message server" embeds said "control words" (4) into "control message" (5) and sent it back to the "transmitter" (1), the said "transmitter" send this control message (5) to the "terminal" (3) that extracts said "control words" (4) during a "restitution step" (7), and uses them (8),
the said process contains at least the following additional steps:
- transformation (10) of the said "control words" (4) into "changed control words" (11) using at least one algorithm that keeps the format of the control words, before their reception by said "Message server" (2),
- extraction (14) of the said "changed control words" (23) from the said "control messages" (12), after reception by the said "terminal" (3),
- Un-transformation (15) of said "changed control words" 2(3) to obtain the said "control words" (4).

2. Process according to the claim 1 **characterized in that** it contains at least the following steps :
- transmission (25) of "transformation parameters" (22) used in the transformation step (21), to the at least one said "terminal" (3)
- reception, by the said at least one "terminal", of the said "transformation parameters" (22)
- use, of these said "transformation parameters", during the said un-transformation step (29).

3. Process according to the claim 2,
**characterized in that** the said "transmission of "transformation parameters"" (25) step contains at least a combination of said control message (24) and said "transformation parameters" (22) inside a "changed control message" (26) that keeps the control message format.

4. Process according to the claim 3,
**characterized in that** the said "reception" consists in extracting, from "changed control message" (26), said "control message" (24) that is transmitted to the "restitution step" (28), and said "transformation parameters" (22) that will be used during the "un-transformation step" (29).

5. Device able to receive control words (4) from an electronic device (1) called "transmitter"
**characterized in that:**
- it contains means (21) to transform the received control words (4) into "changed control words" (23) using at least one algorithm, keeping "control word" format
- and it contains means to send said "changed control words" (23) to at least one electronic device called "Message server" (2).

6. Device according to the claim 5, **characterized in that** it contains means (25) to send to the "terminal" (3), the "transformation parameters" (22) used to transform "changed control words" (23).

7. Device according to the claim 6, **characterized in that** said "transformation parameters" (22) are combined, with control message (24), into "changed control message" (26) that keeps control message format.

8. Device able to receive control message (26) from at least one electronic device (1) said "transmitter", including a "control message receiver" (28) able to extract "control words" from "control message", **characterized in that**
- it contains means (29) to Un-transform said "changed control words" (23) to obtain the said "control words" (4).

9. Device according to the claim 8, **characterized in that** it contains means to analyze control message, and to distinguish "changed control message" (26) from "control message" (24).

10. Device according to the claim 9, **characterized in that** it contains means (27) to extract, from "changed control message" (26), "transformation parameters" (22) and "control message" (24).

11. Device according to the claim 10,
**characterized in that** it contains means to transmit "transformation parameters" (22) to the said means (29) able to Un-transform said "changed control words" (23) to obtain the said "control words" (4).

12. Device according to every claim 9 or claim 10, **characterized in that** it contains means (6) to transmit "control messages" (12) to the said "control message receiver" (14).
